# EUROPÄISCHE PATENTSCHRIFT

(11) **EP 1 111 189 B1**
(45) Veröffentlichungstag und Bekanntmachung des Hinweises auf die Patenterteilung: **02.03.2011**
(21) Anmeldenummer: 00123140.6
(22) Anmeldetag: 25.10.2000
(51) Int. Cl.: F01D 5/18, F02C 7/18

(54) **Kühlluftführung für den Turbinenrotor eines Gasturbinen-Triebwerkes**
Cooling air path for the rotor of a gas turbine engine
Chemin d'air de refroidissement pour le rotor d'une turbine à gaz

(30) Priorität: 22.12.1999 DE 19962244
(43) Veröffentlichungstag der Anmeldung: 27.06.2001
(73) Patentinhaber: Rolls-Royce Deutschland GmbH, 15827 Dahlewitz (DE)
(72) Erfinder: Rau, Guido, Dr., 81735 München (DE)
(74) Vertreter: Hager, Thomas Johannes

(56) Entgegenhaltungen:
- GB-A- 2 018 362
- US-A- 3 034 298
- US-A- 3 437 313
- US-A- 3 453 825
- US-A- 4 657 482

## Beschreibung

Die Erfindung betrifft ein Kühlluft-Führungssystem im Hochdruck-Turbinenabschnitt eines Gasturbinen-Triebwerkes, wobei ein Teil des aus dem Kompressorabschnitt des Triebwerkes austretenden und an der Gasturbinen-Brennkammer vorbeigeführten Luftstromes über ein in einer Trennwand vorgesehenes erstes Vordrallsystem in eine der ersten Turbinen-Scheibe vorgelagerte Vordrallkammer gelangt und von dieser aus insbesondere den luftgekühlten Schaufeln dieser Scheibe zu Kühlzwecken zugeführt wird, und wobei ein weiterer Teil dieses Luftstromes über ein zweites Luftübertrittssystem, das in Radialrichtung betrachtet weiter innen als das erste Vordrallsystem liegt, ebenfalls zur Stirnseite der ersten Turbinen-Scheibe gelangen kann. Zum technischen Umfeld wird neben der EP 0 757 750 B1 insbesondere auf die DE 29 13 548 C2 verwiesen.

Kühlluft-Führungssysteme nach dem Oberbegriff des Anspruchs 1 sind in mannigfachen Ausführungsformen bekannt geworden. Dabei wird mit Hilfe des sog. Vordrallsystemes, welches bspw. in Form eines geeigneten Schaufelgitters, daneben aber auch in Form von in die besagte Trennwand eingebrachten Bohrungen, deren Achse bezüglich der Rotationsachse des Triebwerkes teilweise in Umfangsrichtung weist, ausgebildet sein kann, dem in die hinter dieser Trennwand liegende und dabei der ersten Turbinen-Scheibe vorgelagerte Vordrallkammer eintretenden Luftstrom ein Drall aufgeprägt, der der Rotationsrichtung der Turbinen-Scheibe gleichgerichtet ist. Auf diese Weise ist sichergestellt, daß dieser Kühl-Luftstrom bzw. diese in die Vordrallkammer eintretende Luftströmung günstig relativ zur Oberfläche der rotierenden Scheibe verläuft, wobei vorteilhafterweise aufgrund der Umlenkung der Luftströmung im Vordrallsystem die Temperatur dieses Kühlluftstromes herabgesetzt wird, so daß auch hierdurch eine verbesserte Kühlwirkung erzielt wird.

Zumeist ist das besagte Vordrallsystem in Radialrichtung (bezüglich der Rotationsachse des Triebwerkes betrachtet) ziemlich weit außen, d.h. relativ nahe dem Haupt-Strömungskanal des Triebwerkes, in welchem das heiße Arbeitsgas geführt ist, angeordnet. Auf diese Weise steht für die Kühlung der Schaufeln dieser Turbinenscheibe ein ausreichend kühler Luftstrom zur Verfügung, der nicht zuvor an der diese Schaufeln tragenden Scheibe übermäßig aufgeheizt wurde. Um den radial weiter innen liegenden Bereich der Scheibe ebenfalls kühlen zu können, wird dieser mit einem Teil des vom Kompressor verdichteten und an der Gasturbinen-Brennkammer vorbeigeleiteten Luftstromes beaufschlagt, wobei für diesen Teil des Kühlluftstromes ein zweites Luftübertrittssystem vorgesehen ist bzw. sein kann. Im Stand der Technik nach der eingangs zweitgenannten DE 29 13 548 C2 bleibt dabei dieser über das zweite Luftübertrittssystem zur Stirnseite der ersten Turbinen-Scheibe hingeführte Luftstrom im wesentlichen getrennt vom über das erste Vordrallsystem zugeführten Luftstrom, d.h. die durch das zweite Luftübertrittssystem strömende Kühlluft gelangt bei diesem bekannten Stand der Technik nicht oder jedenfalls nur zu einem äußerst geringen Teil in die besagte Vordrallkammer.

Die über das zweite Luftübertrittssystem zugeführte Luft weist bereits auf Grund der Tatsache, daß sie sich in Radialrichtung betrachtet ziemlich weit innen befindet, nur einen geringen Drall auf. Auch aus diesem Grund ist die Kühlwirkung dieser auf die Scheibenoberfläche gerichteten Luftströmung relativ gering. Zudem führt der mit dem geringen Drall relativ niedrige Drallfaktor (dies ist der Quotient aus der Umfangsgeschwindigkeit des Luftstromes und der Umfangsgeschwindigkeit der Scheibe) zu einer hohen sog. Relativtotaltemperatur der Scheibe, was sich - wie dem Fachmann bekannt ist - auf deren Lebensdauer negativ auswirkt.

Ist das zweite, in Radialrichtung weiter innen liegende Luftübertrittssystem dabei - wie im bekannten Stand der Technik oft anzutreffen - in Form einer Labyrinthdichtung ausgebildet, so wird die hierüber zugeführte Luft durch Reibungseffekte in der Labyrinthdichtung sogar noch zusätzlich aufgeheizt. All dies hat dann zur Folge, daß der in Radialrichtung weiter innen liegende Bereich der Turbinen-Scheibe erheblich weniger gekühlt wird, als deren radial weiter außen liegender Bereich. Als Folge hiervon kann sich in der Scheibe in Radialrichtung ein unerwünscht großer Temperaturgradient einstellen.

Die US-A-4 657 482 beschreibt ein Kühlluftführungssystem im Hochdruckturbinenabschnitt eines Gasturbinentriebwerks, wobei ein Teil des aus dem Kompressorabschnitt des Triebwerks austretenden und an der Gasturbinenbrennkammer vorbeigeführten Luftstroms über eine außerhalb eines Triebwerkinnenraums liegende Ringkammer und nachfolgend über ein in einer Trennwand vorgesehenes erstes Vordrallsystem in eine der ersten Turbinenscheibe vorgelagerte Vordrallkammer gelangt. Von der Vordrallkammer aus wird die Kühlluft insbesondere zur Schaufelkühlung verwendet. Ein Teil der in der Ringkammer befindlichen Luft wird radial nach innen geleitet und einem radial weiter innenliegenden Vordrallsystem zugeführt, durch welches diese Teilluft in die Vordrallkammer gelangt. Die Ringkammer führt somit zu einer Aufteilung der Luft, einmal zu dem ersten Vordrallsystem und dann zu dem zweiten Vordrallsystem. Hierdurch kann sich das Problem ergeben, dass die Luftmenge nicht in gewünschter Weise durch die beiden Vordrallsysteme geleitet wird und somit die Kühlung nicht optimiert wird.

Aus der GB-A-2 018 362 ist ebenfalls ein Kühlluftführungssystem vorbekannt, bei welchem lediglich ein Vordrallsystem vorgesehen ist, um Kühlluft in die Vordrallkammer zu überführen.

Der Erfindung liegt die Aufgabe zugrunde, ein Kühlluftführungssystem der eingangs genannten Art zu schaffen, welches unter Vermeidung der Nachteile des Standes der Technik eine optimierte Scheibenkühlung und Kühlluftzufuhr zu den Schaufeln ermöglicht.

Erfindungsgemäß wird die Aufgabe durch die Merkmale des Hauptanspruchs gelöst.

Die Unteransprüche zeigen weitere vorteilhafte Ausgestaltungen der Erfindung.

Erfindungsgemäß ist somit vorgesehen, daß das zweite Luftübertrittssystem ebenfalls als ein in der Vordrallkammer mündendes Vordrallsystem ausgebildet ist. Bevorzugt ist dabei zwischen einem Abschnitt einer die Vordrallkammer begrenzenden Trennwand und einem an diesem Trennwand-Abschnitt angrenzenden Turbinenwellen-Abschnitt ein Dichtsystem vorgesehen, welches eine geringere Luftleckage zuläßt, als die an dieser Stelle üblicherweise vorgesehenen Labyrinthdichtungen.

Erfindungsgemäß wird die Kühlluft in Richtung zur Scheiben-Oberfläche bzw. zur Stirnseite der ersten Turbinen-Scheibe sowohl im radial weiter außen liegenden Bereich als auch in einem radial weiter innen liegenden Bereich jeweils über ein eigenes Vordrallsystem geleitet. Neben dem im Stand der Technik bekannten ersten Vordrallsystem zur Kühlluft-Führung ist somit ein zweites (sekundäres) Vordrallsystem vorhanden. Dabei münden diese beiden Vordrallsysteme in der gleichen der Scheibe vorgelagerten Vordrallkammer, welche nun dementsprechend größer ausgebildet ist, d.h. welche sich nunmehr in Radialrichtung betrachtet weiter nach innen erstrecken kann. Hiermit ist eine äußerst wirksame und dabei in radialer Richtung gleichmäßige Kühlung der Scheibe erzielbar. Mit diesem sog. sekundären Vordrallsystem wird darüber hinaus aufgrund des geänderten Drallfaktors die Relativtotaltemperatur der Scheibe abgesenkt, so daß insgesamt die radialen Temperaturgradienten in der Scheibe erheblich reduziert werden.

Mit dem vorgeschlagenen verbesserten Dichtsystem mit geringerer Luftleckage (bspw. in Form einer Bürstendichtung wie in der eingangs genannten EP 0 757 750 B1 gezeigt) wird die Effizienz des zweiten bzw. sekundären Vordrallsystemes gesteigert, u.a. auch aufgrund des von der rotierenden Scheibe angesaugten Pumpmassenstromes. Vorteilhafterweise ist das Gewicht eines Bürsten-Dichtsystemes geringer als das einer herkömmlichen Labyrinthdichtung.

Im folgenden wird die Erfindung anhand eines lediglich ausschnittsweise und prinzipiell dargestellten bevorzugten Ausführungsbeispieles weiter erläutert. In der einzigen beigefügten Figur ist ein erfindungsgemäßes Kühlluft-Führungssystem schematisch dargestellt, wobei sämtliche näher beschriebenen Merkmale erfindungswesentlich sein können.

Mit der Bezugsziffer 1 ist die Stufe-I-Lauf-Scheibe im Hochdruck-Turbinenabschnitt eines nicht näher dargestellten Gasturbinen-Triebwerkes bezeichnet, die an ihren Außenumfang wie üblich eine Vielzahl von lediglich teilweise dargestellten Schaufeln 2 trägt, die in den das Arbeitsgas führenden Haupt-Strömungskanal 3 des Triebwerkes hineinragen. Den wie üblich mit der Lauf-Scheibe 1 um eine in der Figurendarstellung unten liegende Rotationsachse 4 rotierenden sog. Lauf-Schaufeln 2 sind im Haupt-Strömungskanal 3 wie üblich starr angeordnete Leitschaufeln 5 vorgelagert, d.h. das Arbeitsgas strömt im wesentlichen gemäß Pfeilrichtung A im Kanal. Diese Pfeilrichtung A ist im übrigen gleich der Axialrichtung des Triebwerkes und wird daher im weiteren ebenfalls mit dem Buchstaben A bezeichnet, während sich die Radialrichtung R senkrecht hierzu erstreckt und von der zentral innen liegenden zur Axialrichtung A parallelen Rotationsachse 4 des Triebwerkes ausgehend nach außen gerichtet ist.

Dem lediglich ausschnittsweise dargestellten Hochdruck-Turbinenabschnitt ist wie üblich eine Brennkammer (nicht dargestellt) vorgelagert, stromauf derer wie üblich ein sog. Kompressorabschnitt des Triebwerkes vorgesehen ist. Linksseitig des figürlich dargestellten Triebwerks-Ausschnittes folgt gegen Axialrichtung A betrachtet somit zunächst die Brennkammer und darauf der Verdichter- oder Kompressorabschnitt. Dabei wird - wie bekannt - nicht der gesamte vom Kompressor geförderte Luftstrom durch die Triebwerks-Brennkammer hindurchgeleitet und dort durch Verbrennung von zugeführtem Kraftstoff energetisch angereichert, sondern ein Teil des im Kompressorabschnitt verdichteten Luftstromes wird an der Brennkammer vorbeigeführt und kann somit, da keine weitere Erhitzung erfolgte, sowohl als sog. Sperrluft für den Turbinen-Innenraum als auch als Kühlluft für zu kühlende Bauteile im Turbinenabschnitt verwendet werden.

So bedürfen insbesondere die Schaufeln 2, aber auch die diese tragende Stufe-I-Lauf-Scheibe 1 einer intensiven Kühlung durch einen relativ kalten Luftstrom, der in der Figurendarstellung generell durch Pfeile 6 dargestellt ist, weshalb für diesen wie bereits erläutert an der Brennkammer vorbeigeleiteten Luftstrom sowie für Teile desselben im folgenden die Bezugsziffer 6 verwendet wird. Wie üblich wird nun die Stirnseite 1a der Scheibe 1 mit diesem Luftstrom 6 beaufschlagt, d.h. zumindest ein Teil dieses Luftstromes 6 gelangt in eine der Scheibe 2 vorgelagerte Vordrallkammer 7, die von dem in Axialrichtung A betrachtet nochmals davor liegenden Innenraum 8 des Triebwerks durch eine Trennwand 9 abgetrennt ist. Von dieser Vordrallkammer 7 aus wird der eingebrachte Kühl-Luftstrom 6 dann durch in der Turbinen-Scheibe 1 vorgesehene Kühlkanäle 14 in die Innenräume der teilweise hohlen und somit luftgekühlten Lauf-Schaufeln 2 geleitet, so wie dies stark vereinfacht dargestellt ist. Über in den Oberflächen der Schaufeln 2 vorgesehene Filmkühlungsbohrungen (nicht dargestellt) gelangt diese dann bereits erwärmte Kühlluft in den Haupt-Strömungskanal 3.

Zurückkommend zur Kühlluft-Führung im Hochdruck-Turbinenabschnitt des Triebwerkes werden sowohl in den Triebwerks-Innenraum 8 als auch in eine in Radialrichtung R außerhalb dieses Innenraumes 8 liegende Ringkammer 10 Teile des an der Brennkammer vorbeigeführten Luftstromes 6 eingeleitet. Die Einleitung von Kühlluft in die Ringkammer 10 ist etwas detaillierter dargestellt und erfolgt von der Außenseite des Triebwerkes her durch den Haupt-Strömungskanal 3 und zwar durch die luftgekühlten Leitschaufeln 5 hindurch, während in den Innenraum 8 derjenige Teil des Luftstromes 6 gelangt, der quasi durch den Zentralbereich der wie üblich ringförmigen Brennkammer hindurch an dieser vorbeigeführt wird.

Sowohl in der Ringkammer 10 als auch im Innenraum 8 besitzt die darin eingeleitete bzw. befindliche Luftströmung 6 lediglich einen geringen Drall. Hingegen ist es erwünscht, daß der Luftstrom 6 in der Vordrallkammer 7 stark drallbehaftet ist, d.h. quasi zusammen mit der Scheibe 1 um die Rotationsachse 4 rotiert. Aus diesem Grunde wird der Luftstrom 6 in die Vordrallkammer 7 über sog. Vordrallsysteme 11a, 11b eingeleitet. Diese Vordrallsysteme 11a, 11b verleihen der hindurchtretenden Luftströmung 6 einen mit der Rotationsrichtung der Scheibe 1 gleichgerichteten Drall.

Es bestehen verschiedene Möglichkeiten, wie derartige dem Fachmann bekannte Vordrallsysteme ausgebildet sein können. Beispielsweise kann ein bezüglich der Rotationsachse 4 ringförmiges Schaufelgitter aus geeignet gestalteten Schaufeln vorgesehen sein. In einer alternativen, im vorliegenden Ausführungsbeispiel bevorzugten, jedoch der Einfachheit halber nicht explizit dargestellten Ausführungsform werden die Vordrallsysteme 11a, 11b durch bezüglich der Rotationsachse 4 ringförmig angeordnete, in die Trennwand 9 eingebrachte Bohrungen bzw. allgemein Durchtrittsöffnungen gebildet, deren jeweilige Achse jedoch nicht parallel zur Axialrichtung A verläuft, sondern mehr oder weniger stark in Umfangsrichtung (diese steht senkrecht zur Zeichenebene) geneigt bzw. angestellt ist. Somit wird sicher und auf einfache Weise dem durch diese Bohrungen oder Durchtrittsöffnungen hindurch geführten und dann in die Vordrallkammer 7 eintretenden Luftströmung 6 der gewünschte Drall aufgeprägt.

Hier ist nun wesentlich, daß nebeneinander zwei Vordrallsysteme 11a, 11b vorgesehen sind, die beide in der Vordrallkammer 7 münden. Dabei wird das erste, in Radialrichtung R weiter außen liegende Vordrallsystem 11a wird über die Ringkammer 10 mit einem Teil des an der Brennkammer vorbeigeleiteten Luftstromes 6 versorgt, während das zweite (sekundäre), in Radialrichtung R weiter innen liegende Vordrallsystem 11b den Luftstrom 6 aus dem Triebwerks-Innenraum 8 erhält. Mit diesen beiden Vordrallsystemen 11a, 11b ist nun sichergestellt, daß nicht nur der in Radialrichtung R weiter außen liegende Bereich der Scheibe 1 mit einem im ersten Vordrallsystem 11a ausreichend abgekühlten Luftstrom 6 versorgt wird, sondern daß auch der in Radialrichtung R weiter innen liegende Bereich der Scheibe 1 mit einem Kühl-Luftstrom 6 beaufschlagt wird, der im zweiten Vordrallsystem 11b nicht nur eine strömungsdynamische Umlenkung, sondern dabei auch eine Abkühlung erfahren hat.

Gesteigert wird die Wirkung des zweiten, sekundären Vordrallsystemes 11b dadurch, daß zwischen einem Abschnitt 9a der die Vordrallkammer 7 begrenzenden Trennwand 9 und einem an diesem Abschnitt 9a angrenzenden Turbinenwellen-Abschnitt 12 ein Dichtsystem 13 vorgesehen ist, welches eine geringere Luftleckage zuläßt, als die hierfür üblicherweise vorgesehenen Labyrinthdichtungen. Wie ersichtlich ist an dem besagten Turbinenwellen-Abschnitt 12 die Lauf-Scheibe 1 mit einem von ihrer Stirnseite 1a abragenden Ringsteg 1b befestigt, so daß sich die der Scheibe 1 vorgelagerte Vordrallkammer 7 quasi abgewinkelt bis zu derjenigen Stelle erstreckt, an der die ortsfeste Trennwand 9 mit ihrem Abschnitt 9a sehr nahe an die Turbinenwelle bzw. an einen Abschnitt 12 derselben heranragt. In diesem Bereich nun ist wie üblich ein Dichtsystem 13 vorgesehen, welches die Vordrallkammer 7 zumindest teilweise gegenüber dem Triebwerks-Innenraum 8 abdichtet.

Üblicherweise ist dieses Dichtsystem 13 als Labyrithdichtung ausgebildet, welche bekanntermaßen zwar praktisch keine Reibungsverluste erzeugt, jedoch nachteiligerweise eine relativ hohe Leckage, d.h. eine relativ geringe Dichtwirkung aufweist. Hier nun ist in diesem Dichtungsbereich ein eine demgegenüber wesentlich geringere Luft-Leckage zulassendes bzw. aufweisendes Dichtsystem 13 vorgesehen, welches in einer bevorzugten Ausführungsform als an sich bekannte Bürstendichtung ausgebildet ist. Mit einem derartigen eine relativ hohe Dichtwirkung aufweisenden Dichtsystem 13 gelangt über den zugehörigen Dichtspalt zwischen dem Turbinenwellen-Abschnitt 12 und dem Trennwand-Abschnitt 9a äußerst wenig Luft aus dem Triebwerks-Innenraum 8 in die Vordrallkammer 7. Folglich gelangt der Luftstrom 6 aus dem Innenraum 8 insbesondere auch aufgrund der Pumpwirkung der rotierenden Scheibe 1 wie gewünscht im wesentlichen über das zweite Vordrallsystem 11 b in die Vordrallkammer 7.

Mit einem soweit beschriebenen Kühlluft-Führungssystem im Hochdruck-Turbinenabschnitt eines Gasturbinen-Triebwerks ist eine Reduktion der Oberflächentemperaturen der Scheibe 1 im mittleren und radial innen liegenden Bereich der Vordrallkammer 7 um ca. 50° gegenüber dem bekannten Stand der Technik erzielbar. Für die Lauf-Scheibe 1 vorteilhaft wirken sich die daraus resultierenden kleineren radialen Temperaturgradienten auf deren Stirnseite 1a aus. Vorteilhafterweise besitzt die Scheibe 1 aufgrund des nicht mehr als Labyrinthdichtung ausgebildeten Dichtsystemes 13 auch ein geringeres Gewicht. Ferner wird der Mischungsverlust der beiden über die beiden Vordrallsysteme 11a, 11b in die Vordrallkammer 7 zugeführten Luftströme 6 aufgrund von deren gleichartigem Drall reduziert, und es wird auch das Temperaturniveau der zur Kühlung der Lauf-Schaufeln 2 verwendeten bzw. diesen über die Kühlkanäle 14 zugeführten Kühlluft abgesenkt. Dabei sei noch darauf hingewiesen, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Stufe-I-Lauf-Scheibe = Scheibe
- 1a: Stirnseite (von 1)
- 1b: Ringsteg (von 1)
- 2: Lauf-Schaufel
- 3: Haupt-Strömungskanal
- 4: Rotationsachse
- 5: Leitschaufel
- 6: Luftstrom
- 7: Vordrallkammer
- 8: Triebwerks-Innenraum
- 9: Trennwand
- 9a: Trennwand-Abschnitt
- 10: Ringkammer
- 11 a: erstes Vordrallsystem
- 11 b: zweites Vordrallsystem
- 12: Turbinenwellen-Abschnitt
- 13: Dichtungssystem
- 14: Kühlkanal (in 1)
- A: Axialrichtung
- R: Radialrichtung

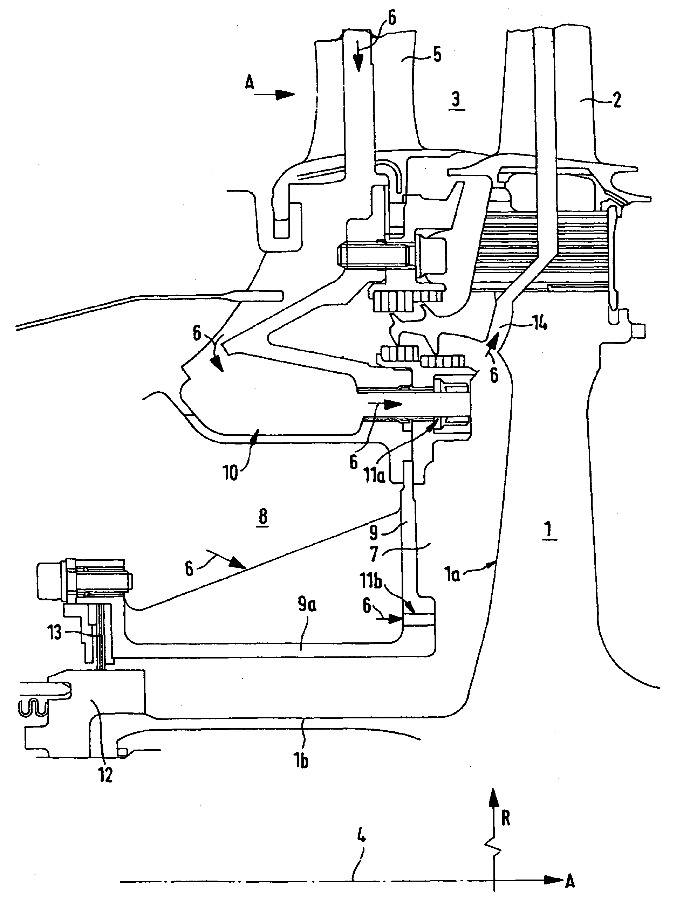

## Patentansprüche

1. Kühlluft-Führungssystem im Hochdruck-Turbinenabschnitt eines Gasturbinen-Triebwerkes, wobei ein Teil des aus dem Kompressorabschnitt des Triebwerkes austretenden und an der Gasturbinen-Brennkammer vorbeigeführten Luftstromes (6) über eine außerhalb eines Triebwerks-Innenraums (8) liegende Ringkammer (10) und über ein in einer Trennwand (9) vorgesehenes erstes Vordrallsystem (11a) in eine der ersten Turbinen-Scheibe (1) vorgelagerte Vordrallkammer (7) gelangt und von dieser aus insbesondere den luftgekühlten Schaufeln (2) dieser Scheibe (1) zu Kühlzwecken zugeführt wird, **dadurch gekennzeichnet, dass** ein weiterer Teil dieses Luftstromes (6) über den Tribwerks-Innenraum über ein zweites Luftübertrittssystem, das in Radialrichtung (R) betrachtet weiter innen als das erste Vordrallsystem (11a) liegt, ebenfalls zur Stirnseite (1a) der ersten Turbinen-Scheibe (1) gelangen kann, und
dass das zweite Luftübertrittssystem ebenfalls als ein in der Vordrallkammer (7) mündendes Vordrallsystem (11 b) ausgebildet ist, welches den weiteren Teil des Luftstroms (6) direkt von dem Triebswerks-Innenraum (8) in die Vordrallkammer (7) leitet.

2. Kühlluft-Führungssystem nach Anspruch 1,
**dadurch gekennzeichnet, dass** zwischen einem Abschnitt (9a) der die Vordrallkammer (7) begrenzenden Trennwand (9) und einem an diesem Abschnitt (9a) angrenzenden Turbinenwellen-Abschnitt (12) ein Dichtsystem (13) in Form einer Bürsteridichtung vorgesehen ist.

## Claims

1. Cooling-air ducting system in the high-pressure turbine section of a gas-turbine engine, in which a portion of the air flow (6) which exits from the compressor section of the engine and bypasses the combustion chamber of the gas turbine is ducted via an annular chamber (10) arranged outside of an engine interior (8) and via a first pre-swirl system (11a) provided in a diaphragm (9) into a pre-swirl chamber (7) arranged upstream of the first turbine disk (1) and is fed from this pre-swirl chamber (7), in particular, to the air-cooled blades (2) of this disk (1) for cooling purposes, **characterized in that** another portion of this air flow (6) can also reach the face (1 a) of the first turbine disk (1) passing the engine interior via a second air transfer system which, with respect to the radial direction (R) is arranged further inward than the first pre-swirl system (11a), and that the second air transfer system is also provided as a pre-swirl system (11 b) issuing into the pre-swirl chamber (7), which leads the further portion of the air flow (6) directly from the engine interior (8) into the pre-swirl chamber (7).

2. Cooling-air ducting system in accordance with Claim 1, **characterized in that** a sealing system (13) in the form of a brush-type seal is provided between a section (9a) of the diaphragm (9) confining the pre-swirl chamber (7) and a turbine-shaft section (12) adjacent to this section (9a).

## Revendications

1. Système de guidage de l'air de refroidissement dans la section haute pression de la turbine d'un moteur à turbine à gaz, dans lequel une partie du flux d'air (6) sortant de la section compresseur du moteur et guidée le long de la chambre de combustion de la turbine à gaz, en passant par une chambre annulaire (10) située hors d'un espace intérieur (8) du moteur et par un premier système de tourbillonnement préliminaire (11a) prévu dans une cloison (9), parvient dans une chambre de tourbillonnement préliminaire (7) située en amont du premier disque de turbine (1), et à partir d'elle, est acheminée en particulier vers les aubes (2) de ce disque (1) refroidies par air afin de les refroidir, **caractérisé en ce qu'**une autre partie de ce flux d'air (6) peut également parvenir sur la face frontale (1a) du premier disque de turbine (1) en passant par l'espace intérieur (8) du moteur à travers un second système de transfert d'air qui, vu dans le sens radial (R), est situé plus à l'intérieur que le premier système de tourbillonnement préliminaire (11a), et que le second système de transfert d'air est également conçu comme système de tourbillonnement préliminaire (11 b) débouchant dans la chambre de tourbillonnement préliminaire (7) et qui achemine directement l'autre partie du flux d'air (6) de l'espace intérieur du moteur (8) vers la chambre de tourbillonnement préliminaire (7).

2. Système de guidage de l'air de refroidissement selon la revendication n° 1, **caractérisé qu'**entre une section (9a) de la cloison (9) délimitant la chambre de tourbillonnement préliminaire (7) et une section d'arbre de turbine (12) adjacente à ladite section (9a) est prévu un système d'étanchéité (13) sous forme de joint brosse.
